# EUROPEAN PATENT APPLICATION

(11) **EP 4 550 441 A1**
(43) Date of publication of application: **07.05.2025**
(21) Application number: 23830518.9
(22) Date of filing: 30.06.2023
(51) Int. Cl.: H01M 4/13, H01M 4/62, H01M 10/0525, H01M 10/0583

(54) **ELECTROCHEMICAL DEVICE AND PREPARATION METHOD THEREFOR, AND ELECTRONIC DEVICE**

(30) Priority: 01.07.2022 CN 202210763419
(71) Applicant: Ningde Amperex Technology Limited, Ningde, Fujian 352100 (CN)
(72) Inventor: ZHONG, Huawei, Ningde, Fujian 352100 (CN)
(74) Representative: Icosa
(86) International application number: PCT/CN2023/104950
(87) International publication number: WO 2024/002355

(57) **Abstract**

This application provides an electrochemical device, a method for preparing same, and an electronic device. The electrochemical device includes an electrode assembly. The electrode assembly includes a positive electrode plate and a negative electrode plate. The positive electrode plate includes a positive current collector and a first positive active material layer disposed on a surface of the positive current collector. The negative electrode plate includes a negative current collector and a first negative active material layer disposed on a surface of the negative current collector. The first negative active material layer includes a prelithiation region and a non-prelithiation region. The negative electrode plate includes a first groove that runs through the first negative active material layer and exposes the surface of the negative current collector. The positive electrode plate further includes a first insulation layer affixed to the first positive active material layer facing the first groove. The non-prelithiation region is located inside an orthographic projection of the first insulation layer on the negative electrode plate. The technical solution provided in this application can reduce the risk of lithium plating on the negative electrode plate and improve safety of the electrochemical device by adjusting the dimension of the non-prelithiation region around the first groove.

## Description

This application claims priority to Chinese Patent Application No. 202210763419.7, filed with the China National Intellectual Property Administration on July 1, 2022 and entitled "ELECTROCHEMICAL DEVICE AND METHOD FOR PREPARING SAME, AND ELECTRONIC DEVICE", which is incorporated herein by reference in its entirety.

### TECHNICAL FIELD

This application relates to the field of electrochemical technology, and in particular, to an electrochemical device, a method for preparing same, and an electronic device.

### BACKGROUND

Lithium-ion batteries are widely used in the field of consumer electronics by virtue of characteristics such as a high specific energy, a high working voltage, a low self-discharge rate, a small size, and a light weight. With rapid development of portable electronic devices, people are imposing higher requirements on the energy density, cycle performance, and the like of the lithium-ion batteries. The energy density of a lithium-ion battery can be further increased by supplementing a negative electrode plate with lithium. However, the negative electrode plate supplemented with lithium may be prone to lithium plating, thereby being adverse to improving safety of the lithium-ion battery.

### SUMMARY

An objective of this application is to provide an electrochemical device, a method for preparing same, and an electronic device to reduce the risk of lithium plating on a negative electrode plate and improve safety of the electrochemical device. Specific technical solutions are as follows:
A first aspect of this application provides an electrochemical device. The electrochemical device includes an electrode assembly. The electrode assembly includes a positive electrode plate and a negative electrode plate. The positive electrode plate includes a positive current collector and a first positive active material layer disposed on a surface of the positive current collector. The negative electrode plate includes a negative current collector and a first negative active material layer disposed on a surface of the negative current collector. The first negative active material layer includes a prelithiation region and a non-prelithiation region. The negative electrode plate includes a first groove that runs through the first negative active material layer and exposes the surface of the negative current collector. The non-prelithiation region includes a first edge and a second edge. The first edge is disposed along a first direction, and the second edge is disposed along a second direction and connected to the first edge. The first direction is a length direction of the negative electrode plate, and the second direction is a width direction of the negative electrode plate. A distance between the first edge and an adjacent edge of the first groove is A₁ mm. A dimension of the first groove in the second direction is B₁ mm. The positive electrode plate further includes a first insulation layer affixed onto the first positive active material layer facing the first groove. The non-prelithiation region is located inside an orthographic projection of the first insulation layer on the negative electrode plate. A dimension of the first insulation layer in the second direction is C₁ mm, satisfying: 0.5 ≤ A₁ ≤ C₁ - B₁ + 1.

Beneficial effects of some embodiments of this application are: This application reduces the risk of lithium plating on the negative electrode plate by creating a non-prelithiation region on the first negative active material layer around the first groove on the negative electrode plate. More lithium ions from the positive electrode can be intercalated in the non-prelithiation region than in the prelithiation region. The positive electrode plate further includes a first insulation layer affixed onto the first positive active material layer facing the first groove. During the cycling of the electrochemical device, the bonding force of the first insulation layer may be weakened by the expansion and contraction of the first positive active material layer and/or by an electrolyte solution. Lithium ions in the first positive active material layer covered by the first insulation layer are migrated out and intercalated into the corresponding negative electrode plate. Due to the non-prelithiation region created around the first groove on the negative electrode plate, a local capacity of the region is relatively high and can accommodate the lithium ions escaping from the region covered by the first insulation layer on the opposite side. In this way, the risk of lithium plating around the first groove of the negative electrode plate is reduced on the basis of increasing the overall capacity of the electrochemical device by supplementing lithium, and the safety of the electrochemical device is improved.

In an embodiment of this application, a distance between the second edge and an adjacent edge of the first groove is A₂ mm, a dimension of the first groove in the first direction is B₂ mm, and a dimension of the first insulation layer in the first direction is C₂ mm, satisfying: 0.5 ≤ A₂ ≤ 0.5 × (C₂ - B₂) + 1. By controlling A₂ to fall within the above range, this application can further reduce the risk of lithium plating around the first groove on the negative electrode plate and improve the safety of the electrochemical device.

In an embodiment of this application, 0.5 ≤ A₁ ≤ 9, and 0.5 ≤ A₂ ≤ 9. By controlling the dimension of the non-prelithiation region to satisfy the above relationship, this application can reduce the risk of lithium plating on the negative electrode plate, improve the safety of the electrochemical device, and achieve an electrochemical device of a relatively high capacity.

In an embodiment of this application, 18 ≤ B₁ ≤ 22, and 9 ≤ B₂ ≤ 13. By adjusting the dimension of the first groove to satisfy the above relationship, this application facilitates manufacturing of the first groove and reduces the impact caused by the large size of the first groove on the capacity of the electrochemical device.

In an embodiment of this application, 25 ≤ C₁ ≤ 29, and 23 ≤ C₂ ≤ 27. By controlling the dimension of the first insulation layer to satisfy the above relationship, this application improves the precision of affixing the first insulation layer, reduces the risk of lithium plating around the first groove on the negative electrode plate, improves the safety of the electrochemical device, and reduces the impact caused by the large size of the first insulation layer on the capacity of the electrochemical device.

In an embodiment of this application, 1.25 ≤ A₁ ≤ 9, and 1.25 ≤ A₂ ≤ 9. By controlling the dimension of the non-prelithiation region to satisfy the above relationship, this application can reduce the risk of lithium plating on the negative electrode plate, and improve the safety and the cycle capacity retention rate of the electrochemical device.

In an embodiment of this application, viewed from a thickness direction of the negative electrode plate, the prelithiation region includes a stripe portion. In the first direction, a width of the stripe portion is 0.1 mm to 2 mm; and/or, in the thickness direction, a thickness of the stripe portion is 0.04 µm to 0.5 µm. The negative electrode plate with the above features can improve the first-cycle Coulombic efficiency of the negative electrode plate, and improve the energy density of the electrochemical device and the manufacturing efficiency of the prelithiation region.

In an embodiment of this application, a material of the prelithiation region includes at least one of lithium carbonate, lithium oxide, lithium nitride, or lithium fluoride. In a process of supplementing the negative electrode plate with lithium, due to the high activity of the metallic lithium, the metallic lithium reacts with the air environment and reacts in a chemical formation process of the electrochemical device to form a layer of lithium-containing compound on the surface of the first negative active material layer. Main components of the lithium-containing compound include at least one of lithium carbonate, lithium nitride, lithium fluoride, or lithium oxide. The negative electrode plate with the above features can improve the first-cycle Coulombic efficiency of the negative electrode plate, increase the energy density of the electrochemical device, increase the resistance of the surface of the negative electrode plate, and reduce the risk of short circuits and short-circuit current. In addition, the material covering the prelithiation region on the surface of the negative active material can reduce the risk of damage to a solid-electrolyte interface film of the negative electrode.

In an embodiment of this application, the first insulation layer includes at least one of a single-sided tape, a double-sided tape, or a hot-melt adhesive. By selecting the first insulation layer in the above range, this application reduces the risk of lithium plating around the first groove on the negative electrode plate and improves the safety of the electrochemical device.

In an embodiment of this application, the negative electrode plate further includes a negative tab. The negative tab is disposed in the first groove and electrically connected to the negative current collector. Such a structure disposed can reduce an internal resistance of the electrochemical device, and increase the charging speed of the electrochemical device.

In an embodiment of this application, the negative electrode plate further includes a second insulation layer disposed on the negative tab. An orthographic projection of the second insulation layer on the negative electrode plate is located inside the non-prelithiation region, thereby reducing the risk of short circuits between the positive electrode and the negative electrode caused by the burrs at the edge of the negative tab and by the connection between the negative tab and the negative current collector, and improving the safety of the electrochemical device.

In an embodiment of this application, the first negative active material layer includes a negative active material. The negative active material includes a silicon-based material, thereby increasing the energy density of the electrochemical device.

In an embodiment of this application, in the second direction, the second groove does not run through the first negative active material layer. Such a structure disposed can reduce the impact caused by the positioning of the first groove on the capacity of the electrochemical device.

A second aspect of this application provides an electronic device. The electronic device includes the electrochemical device according to the first aspect of this application. Due to the good safety performance of the electrochemical device according to this application, the electronic device according to this application possesses good safety performance.

A third aspect of this application provides a method for manufacturing the electrochemical device disclosed in the first aspect of this application. The method includes the following steps:
disposing the first negative active material layer on the surface of the negative current collector, where the negative electrode plate includes the first groove that runs through the first negative active material layer; and disposing a prelithiation region and a non-prelithiation region on the first negative active material layer;
disposing the first positive active material layer on the surface of the positive current collector, and affixing the first insulation layer onto the first positive active material layer; and
stacking the negative electrode plate and the positive electrode plate, and winding the stacked plates to form the electrode assembly, where the first negative active material layer faces the first positive active material layer, and the orthographic projection of the first insulation layer on the negative electrode plate covers the non-prelithiation region.

The electrochemical device prepared by the method according to the third aspect of this application can reduce the risk of lithium plating on the negative electrode plate and improve the safety of the electrochemical device.

In an embodiment of this application, at least one of lithium foil or lithium powder is applied onto a surface of the first negative active material layer to create the prelithiation region on the first negative active material layer. The prelithiation region created in the above manner can improve the first-cycle Coulombic efficiency of the negative electrode plate, and increase the energy density of the electrochemical device.

This application provides an electrochemical device, a method for preparing same, and an electronic device, and reduces the risk of lithium plating on the negative electrode plate by creating a non-prelithiation region on the first negative active material layer around the first groove on the negative electrode plate. More lithium ions from the positive electrode can be intercalated in the non-prelithiation region than in the prelithiation region. The positive electrode plate further includes a first insulation layer affixed onto the first positive active material layer facing the first groove. During the cycling of the electrochemical device, the bonding force of the first insulation layer may be weakened by the expansion and contraction of the first positive active material layer and/or by an electrolyte solution. Lithium ions in the first positive active material layer covered by the first insulation layer are migrated out and intercalated into the corresponding negative electrode plate. Due to the non-prelithiation region created around the first groove on the negative electrode plate, a local capacity of the region is relatively high and can accommodate the lithium ions escaping from the region covered by the insulation layer on the opposite side. In this way, the risk of lithium plating around the first groove of the negative electrode plate is reduced on the basis of increasing the overall capacity of the electrochemical device by supplementing lithium. The technical solutions of this application can reduce the risk of lithium plating on the negative electrode plate and improve the safety of the electrochemical device. Definitely, a single embodiment of this application implemented does not necessarily achieve all of the foregoing advantages concurrently.

### BRIEF DESCRIPTION OF DRAWINGS

To describe the technical solutions in this application or the prior art more clearly, the following outlines the drawings to be used in the embodiments of this application or the prior art. Evidently, the drawings outlined below are merely a part of embodiments of this application.
FIG. 1 is a schematic structural diagram of an electrode assembly according to an embodiment of this application;
FIG. 2 is a schematic structural diagram of a positive electrode plate according to an embodiment of this application;
FIG. 3 is a schematic structural diagram of a negative electrode plate according to an embodiment of this application;
FIG. 4 is a cross-sectional view of a positive electrode plate sectioned along a thickness direction of the positive electrode plate according to an embodiment of this application;
FIG. 5 is a cross-sectional view of a negative electrode plate sectioned along an A-A line shown in FIG. 3 in a thickness direction of the negative electrode plate according to an embodiment of this application;
FIG. 6 is a cross-sectional view of a positive electrode plate sectioned along a thickness direction of the positive electrode plate according to another embodiment of this application;
FIG. 7 is a cross-sectional view of a negative electrode plate sectioned along an A-A line shown in FIG. 3 in a thickness direction of the negative electrode plate according to another embodiment of this application;
FIG. 8 is a scanning electron microscope (SEM) image of a prelithiation region on a negative electrode plate according to an embodiment of this application;
FIG. 9 is a SEM image of a non-prelithiation region around a first groove on a negative electrode plate according to an embodiment of this application; and
FIG. 10 is a SEM image of a lithium-containing compound layer on a surface of a negative electrode plate according to an embodiment of this application.

### DETAILED DESCRIPTION

To make the objectives, technical solutions, and advantages of this application clearer, the following describes this application in further detail with reference to drawings and embodiments. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in specific embodiments of this application, this application is construed by using a lithium-ion battery as an example of the electrochemical device, but the electrochemical device according to this application is not limited to the lithium-ion battery.

A negative electrode plate supplemented with lithium in the prior art is prone to lithium plating, thereby being adverse to improving safety of a lithium-ion battery. The applicant hereof finds that, during lithium supplementation, by supplementing some regions of the negative electrode plate with lithium and leaving some other regions not supplemented, the risk of lithium plating on the negative electrode plate can be reduced on the basis of increasing the capacity of the lithium-ion battery, thereby improving the safety of the lithium-ion battery.

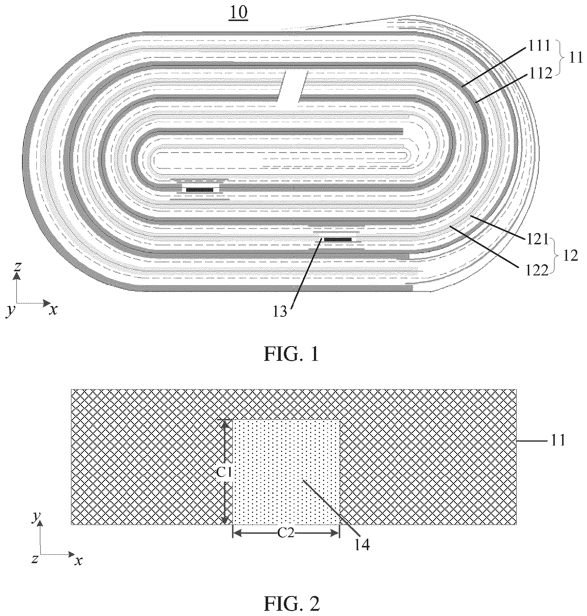

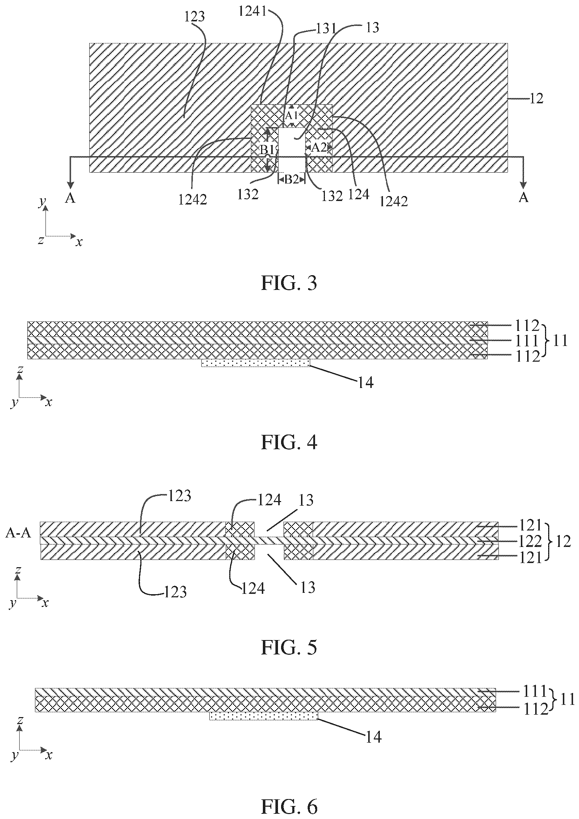

In view of this, a first aspect of this application provides an electrochemical device. The electrochemical device includes an electrode assembly 10. As shown in FIG. 1, the electrode assembly 10 includes a positive electrode plate 11 and a negative electrode plate 12. FIG. 2 is a schematic structural diagram of a positive electrode plate according to an embodiment of this application; FIG. 3 is a schematic structural diagram of a negative electrode plate according to an embodiment of this application; FIG. 4 is a cross-sectional view of a positive electrode plate sectioned along a thickness direction of the positive electrode plate according to an embodiment of this application; and FIG. 5 is a cross-sectional view of a negative electrode plate sectioned along an A-A line shown in FIG. 3 in a thickness direction of the negative electrode plate according to an embodiment of this application. The positive electrode plate 11 includes a positive current collector 111 and a first positive active material layer 112 disposed on a surface of the positive current collector 111. The negative electrode plate 12 includes a negative current collector 122 and a first negative active material layer 121 disposed on a surface of the negative current collector 122. The first negative active material layer 121 includes a prelithiation region 123 and a non-prelithiation region 124. The non-prelithiation region 124 is a region that does not overlap the prelithiation region 123 in the first negative active material layer 121. The negative electrode plate 12 includes a first groove 13 that runs through the first negative active material layer 121 and exposes the surface of the negative current collector 122. In an embodiment of this application, a thickness direction perpendicular to the negative electrode plate 12 is defined as a z-direction, and two directions perpendicular to the z-direction are defined as a first direction (x-direction) and a second direction (y-direction). The first direction (x-direction) is perpendicular to the second direction (y-direction). The non-prelithiation region 124 includes a first edge 1241 and a second edge 1242. The first edge is disposed along a first direction (x-direction), and the second edge is disposed along a second direction (y-direction) and connected to the first edge 1241. The first direction (x-direction) is a length direction of the negative electrode plate 12, and the second direction (y-direction) is a width direction of the negative electrode plate 12. Referring to FIG. 3, a distance between the first edge 1241 and an adjacent edge 131 of the first groove 13 is A₁ mm. That is, the distance between the first edge 1241 and an edge of the first groove 13, the edge extending along the first direction (x-direction) and closest to the first edge 1241, is A₁ mm. A dimension of the first groove 13 in the second direction (y-direction) is B₁ mm. The positive electrode plate 11 further includes a first insulation layer 14 affixed onto the first positive active material layer 112 facing the first groove 13. The non-prelithiation region 124 is located inside an orthographic projection of the first insulation layer 14 on the negative electrode plate 12. A dimension of the first insulation layer 14 in the second direction (y-direction) is C₁ mm, satisfying: 0.5 ≤ A₁ ≤ C₁ - B₁ + 1.

This application reduces the risk of lithium plating on the negative electrode plate 12 by creating a non-prelithiation region 124 on the first negative active material layer 121 around the first groove 13 on the negative electrode plate 12. More lithium ions from the positive electrode can be intercalated in the non-prelithiation region 124 than in the prelithiation region 123. The positive electrode plate 11 further includes a first insulation layer 14 affixed onto the first positive active material layer 112 facing the first groove 13. During the cycling of the electrochemical device, the bonding force of the first insulation layer 14 may be weakened by the expansion and contraction of the first positive active material layer 112 and/or by an electrolyte solution. Lithium ions in the first positive active material layer 112 covered by the first insulation layer 14 are migrated out and intercalated into the corresponding negative electrode plate 12. Due to the non-prelithiation region 124 created around the first groove 13 on the negative electrode plate 12, a local capacity of the region is relatively high and can accommodate the lithium ions escaping from the region covered by the first insulation layer 14. In this way, the risk of lithium plating around the first groove 13 of the negative electrode plate 12 is reduced on the basis of increasing the overall capacity of the electrochemical device by supplementing lithium, and the safety of the electrochemical device is improved.

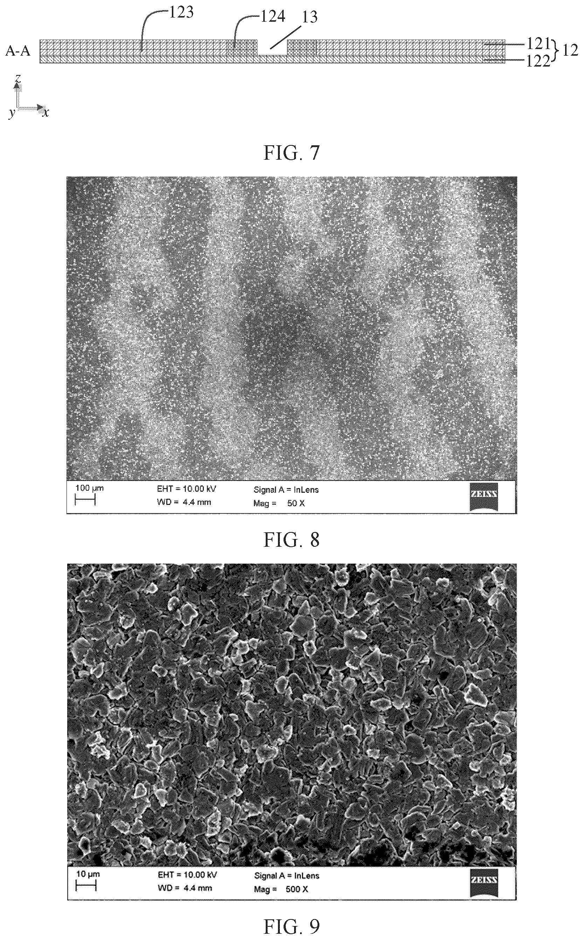

In an embodiment of this application, the cross-sectional views of the positive electrode plate 11 and the negative electrode plate 12 sectioned along the thickness direction of the electrode plate are shown in FIG. 6 and FIG. 7. The positive electrode plate 11 includes a positive current collector 111 and a first positive active material layer 112 disposed on one surface of the positive current collector 111. The negative electrode plate 12 includes a negative current collector 122 and a first negative active material layer 121 disposed on one surface of the negative current collector 122, thereby also achieving the objectives of this application.

In an embodiment of this application, a distance between the second edge 1242 and an adjacent edge 132 of the first groove 13 is A₂ mm. That is, the distance between the second edge 1242 and an edge of the first groove 13, the edge extending along the second direction (y-direction) and closest to the second edge 1242, is A₂ mm. A dimension of the first groove 13 in the first direction (x-direction) is B₂ mm, and a dimension of the first insulation layer 14 in the first direction (x-direction) is C₂ mm, satisfying: 0.5 ≤ A₂ ≤ 0.5 × (C₂ - B₂) + 1. By controlling A₂ to fall within the above range, this application can further reduce the risk of lithium plating around the first groove 13 on the negative electrode plate 12 and improve the safety of the electrochemical device.

In an embodiment of this application, 0.5 ≤ A₁ ≤ 9, and 0.5 ≤ A₂ ≤ 9. By controlling the dimension of the non-prelithiation region 124 to satisfy the above relationship, this application can reduce the risk of lithium plating on the negative electrode plate 12, improve the safety of the electrochemical device, and achieve an electrochemical device of a relatively high capacity.

In an embodiment of this application, 18 ≤ B₁ ≤ 22, and 9 ≤ B₂ ≤ 13. For example, B₁ may be 18, 19, 20, 21, 22, or a value falling within a range formed by any two thereof. B₂ may be 9, 10, 11, 12, 13, or a value falling within a range formed by any two thereof. By adjusting the dimension of the first groove 13 to satisfy the above relationship, this application facilitates manufacturing of the first groove 13 and reduces the impact caused by the large size of the first groove on the capacity of the electrochemical device.

In an embodiment of this application, 25 ≤ C₁ ≤ 29, and 23 ≤ C₂ ≤ 27. For example, C₁ may be 25, 26, 27, 28, 29, or a value falling within a range formed by any two thereof. C₂ may be 23, 24, 25, 26, 27, or a value falling within a range formed by any two thereof. By controlling the dimension of the first insulation layer 14 to satisfy the above relationship, this application improves the precision of affixing the first insulation layer 14, reduces the risk of lithium plating around the first groove 13 on the negative electrode plate 12, improves the safety of the electrochemical device, and reduces the impact caused by the large size of the first insulation layer 14 on the capacity of the electrochemical device.

In an embodiment of this application, 1.25 ≤ A₁ ≤ 9, and 1.25 ≤ A₂ ≤ 9. By controlling the dimension of the non-prelithiation region 124 to satisfy the above relationship, this application can reduce the risk of lithium plating on the negative electrode plate 12, and improve the safety and the cycle capacity retention rate of the electrochemical device.

In an embodiment of this application, viewed from a thickness direction (z-direction) of the negative electrode plate 12, the prelithiation region 123 includes a stripe portion. In the first direction (x-direction), a width of the stripe portion is 0.1 mm to 2 mm; and/or, in the thickness direction, a thickness of the stripe portion is 0.04 µm to 0.5 µm. The negative electrode plate 12 with the above features can improve the first-cycle Coulombic efficiency of the negative electrode plate 12, and improve the energy density of the electrochemical device and the manufacturing efficiency of the prelithiation region. Specifically, in an embodiment, in the first direction, the width of the stripe portion is 0.1 mm to 2 mm; and, in the thickness direction, the thickness of the stripe portion is 0.04 µm to 0.5 µm. In an embodiment, in the first direction, the width of the stripe portion is 0.1 mm to 2 mm. In an embodiment, in the thickness direction, the thickness of the stripe portion is 0.04 µm to 0.5 µm.

Understandably, the stripe portion means a lithium strip containing spaced stripes and formed during calendering of lithium metal when lithium is supplemented by using metallic lithium foil. In a process of laminating the lithium foil with the negative electrode plate 12, the lithium strip containing spaced stripes can be maintained. Therefore, the stripe portion can be observed from the thickness direction (z-direction) of the negative electrode plate 12. After the prelithiation negative electrode plate 12 and the positive electrode plate 11 are assembled to form an electrochemical device, the stripe portion keeps in existence on the surface of the negative electrode plate 12 over time along with the absorption of lithium metal by the negative electrode plate 12 and the subsequent chemical formation and capacity grading. After the electrochemical device is cycled, the prelithiation region 123 on the negative electrode plate 12 includes a stripe portion, as shown in a SEM image in FIG. 8, while the non-prelithiation region 124 around the first groove 13 includes no stripe region, as shown in a SEM image in FIG. 9.

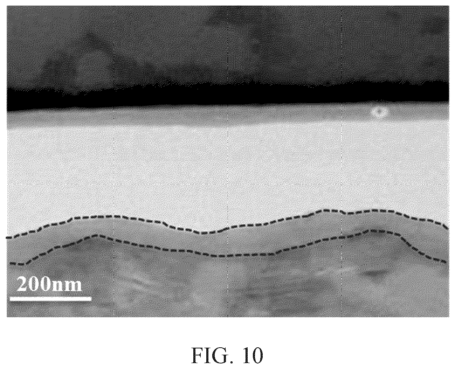

In an embodiment of this application, the material of the prelithiation region 123 includes at least one of lithium carbonate, lithium oxide, lithium nitride, or lithium fluoride. In a process of supplementing the negative electrode plate 12 with lithium, due to the high activity of the metallic lithium, the metallic lithium reacts with the air (such as oxygen and a trace amount of moisture) and reacts with a fluorine-containing substance in the electrolyte solution in a chemical formation process of the electrochemical device to form a layer of lithium-containing compound on the surface of the first negative active material layer 121. Main components of the lithium-containing compound include at least one of lithium carbonate, lithium nitride, lithium fluoride, or lithium oxide. After the assembled electrode assembly is filled with the electrolyte solution, the lithium metal reacts rapidly with the negative active material, but the lithium-containing compound layer does not react with the negative active material. After the active lithium metal reacts with the negative active material, the lithium-containing compound layer remains on the surface of the negative electrode plate 12. As shown in FIG. 10, a lithium-containing compound layer (between two black dashed lines) is formed on the surface of the negative active material in the prelithiation region 123. The thickness of the lithium-containing compound layer is 0.04 µm to 0.5 µm. The negative electrode plate 12 with the above features can improve the first-cycle Coulombic efficiency of the negative electrode plate 12, increase the energy density of the electrochemical device, increase the resistance of the surface of the negative electrode plate 12, and reduce the risk of short circuits and short-circuit current. In addition, the material covering the prelithiation region 123 on the surface of the negative active material can reduce the risk of damage to a solid-electrolyte interface film of the negative electrode.

In an embodiment of this application, the first insulation layer 14 includes at least one of a single-sided tape, a double-sided tape, or a hot-melt adhesive. By selecting the insulation layer in the above range, this application reduces the risk of lithium plating around the first groove 13 on the negative electrode plate 12 and improves the safety of the electrochemical device. In this application, the material of the first insulation layer 14 is not particularly limited, as long as the objectives of this application can be achieved. For example, the single-sided tape includes a substrate layer and a bonding layer. The material of the substrate layer includes, but is not limited to, at least one of polyfluoroolefin, polyethylene terephthalate (PET), polyimide (PI), polyamideimide (PAI), polyvinyl chloride (PVC), or polyolefin (POF, such as a biaxially oriented polyolefin heat-shrinkable film). The polyfluoroolefin includes, but is not limited to, polytetrafluoroethylene or polyvinylidene difluoride. The bonding layer includes an adhesive material. The adhesive material includes, but is not limited to, at least one of carboxymethyl cellulose, styrene-butadiene rubber, polyvinylidene difluoride, polytetrafluoroethylene, fluorinated rubber, polyurethane, polypropylene alcohol, sodium polyacrylate, polyetherimide, or acrylate.

In an embodiment of this application, the negative electrode plate 12 further includes a negative tab. The negative tab is disposed in the first groove 13 and electrically connected to the negative current collector 122. The electrical connection means that electrons can be conducted between the negative tab and the negative current collector 122. As shown in FIG. 5, in an embodiment, the first groove 13 is created on both sides of the negative current collector 122. The negative tab is disposed in at least one of the first grooves 13. Such a structure disposed can reduce an internal resistance of the electrochemical device, and increase the charging speed of the electrochemical device.

In an embodiment of this application, the negative electrode plate 12 further includes a second insulation layer disposed on the negative tab, and an orthographic projection of the second insulation layer on the negative electrode plate 12 is located inside the non-prelithiation region 124. The second insulation layer includes, but is not limited to, an adhesive tape, such as a single-sided tape. The second insulation layer disposed in the above manner can reduce the risk of short circuits between the positive electrode and the negative electrode caused by the burrs at the edge of the negative tab and by the connection between the negative tab and the negative current collector 122, and improve the safety of the electrochemical device.

In an embodiment of this application, the first negative active material layer 121 includes a negative active material. The negative active material includes a silicon-based material. The silicon-based material includes at least one of silicon, a silicon-oxygen compound (SiOₓ, 0 < x ≤ 2), a silicon alloy, or a silicon-carbon composite. The negative active material in this application may further include at least one of graphite, mesocarbon microbead (MCMB), hard carbon, soft carbon, Li-Sn alloy, Li-Sn-O alloy, Sn, SnO, SnO₂, spinel-structured lithium titanium oxide Li₄Ti₅O₁₂, Li-Al alloy, metallic lithium, or the like. The material selected in the above range is conducive to increasing the energy density of the electrochemical device.

In an embodiment of this application, in the second direction, the first groove 13 does not run through the first negative active material layer 121. Such a structure disposed can reduce the impact caused by the positioning of the first groove on the capacity of the electrochemical device.

The electrochemical device in this application is not particularly limited, and may be any device in which an electrochemical reaction occurs. In an embodiment of this application, the electrochemical device may be, but is not limited to, a lithium-ion secondary battery (lithium-ion battery), a lithium polymer secondary battery, a lithium-ion polymer secondary battery, or the like. In an embodiment of this application, structures of the lithium-ion battery include a jelly-roll structure, a stacked-type structure, and the like. In terms of structure, the lithium-ion battery of this application may be, but is not limited to, a pouch-type lithium-ion battery, a prismatic hard-shell battery, a cylindrical hard-shell battery, or the like.

The negative current collector 122 is not particularly limited in this application, as long as the objectives of this application can be achieved. For example, the negative current collector 122 may be copper foil, copper alloy foil, nickel foil, stainless steel foil, titanium foil, foamed nickel, foamed copper, a composite current collector, or the like. The thickness of the negative current collector is not particularly limited in this application, as long as the objectives of this application can be achieved. For example, the thickness of the negative current collector is 4 µm to 10 µm.

In this application, the first negative active material layer 121 may be disposed on one surface of the negative current collector 122 in the thickness direction or on both surfaces of the negative current collector 122 in the thickness direction of the current collector. It is hereby noted that the "surface" here may be the entire region of the negative current collector 122, or a partial region of the negative current collector 122, without being particularly limited in this application, as long as the objectives of the application can be achieved.

The thickness of the first negative active material layer 121 is not particularly limited in this application, as long as the objectives of this application can be achieved. For example, the thickness of the first negative active material layer on a single side may be 30 µm to 160 µm.

In this application, the first negative active material layer 121 is applied on the surface of the negative current collector 122, or, a functional layer is further included between the negative current collector 122 and the first negative active material layer 121. For example, the functional layer includes, but is not limited to, a conductive bonding layer. The conductive bonding layer may include a conductive agent and a binder. The conductive agent is not particularly limited in this application, as long as the objectives of this application can be achieved. For example, the conductive agent may be, but is not limited to, at least one of a carbon-based material, a metal-based material, or a conductive polymer. The carbon-based material is at least one selected from natural graphite, artificial graphite, conductive carbon black, acetylene black, Ketjen black, or carbon fibers. The metal-based material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole.

The binder is not particularly limited in this application, as long as the objectives of this application can be achieved. For example, the binder may include, but is not limited to, at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene difluoride, polyethylene, polypropylene, polyacrylic acid, styrene-butadiene rubber, acrylic styrene-butadiene rubber, epoxy resin, or nylon.

The positive current collector 111 is not particularly limited in this application, as long as the objectives of this application can be achieved. For example, the positive current collector 111 may include aluminum foil, aluminum alloy foil, a composite current collector, or the like. The thickness of the positive current collector 111 is not particularly limited in this application, as long as the objectives of this application can be achieved. For example, the thickness of the positive current collector 111 is 5 µm to 20 µm, and preferably, 6 µm to 18 µm.

The first positive active material layer 112 in this application may include a positive active material. The type of the positive active material is not particularly limited in this application, as long as the objectives of this application can be achieved. For example, the positive active material may include at least one of lithium nickel cobalt manganese oxide, lithium nickel cobalt aluminum oxide, lithium iron phosphate, a lithium-rich manganese-based material, lithium cobalt oxide, lithium manganese oxide, lithium manganese iron phosphate, or the like. In this application, the positive active material may further include a non-metallic element. For example, the non-metallic elements include at least one of fluorine, phosphorus, boron, chlorine, silicon, or sulfur. Such elements can further improve the stability of the positive active material.

The thickness of the first positive active material layer 112 is not particularly limited in this application, as long as the objectives of this application can be achieved. For example, the thickness of the first positive active material layer on a single side is 30 µm to 120 µm.

In this application, the first positive active material layer 112 may be disposed on one surface of the positive current collector 111 in the thickness direction or on both surfaces of the positive current collector 111 in the thickness direction of the current collector. It is hereby noted that the "surface" here may be the entire region of the positive current collector, or a partial region of the positive current collector, without being particularly limited in this application, as long as the objectives of the application can be achieved.

The separator and the electrolyte solution are not particularly limited in this application, and may be selected by a person skilled in the art depending on the actual situation, as long as the objectives of this application can be achieved.

The method for adjusting and controlling the dimensions of the prelithiation region 123 and the non-prelithiation region 124 is not particularly limited in this application, and may be any method known in the art. As an example, an adhesive tape may be affixed onto a region that requires no lithium supplementation on the surface of the negative electrode plate 12. The dimension of the adhesive tape may be adjusted according to the designed dimension of the non-prelithiation region 124, and then a piece of lithium foil is laminated and rolled with the surface of the negative electrode plate 12. Upon completion of the lithium supplementation, the adhesive tape is removed, thereby obtaining a negative electrode plate 12 of which a partial region is supplemented with lithium.

A second aspect of this application provides an electronic device. The electronic device includes the electrochemical device according to the first aspect of this application. Due to the good safety performance of the electrochemical device according to this application, the electronic device according to this application possesses good safety performance.

The electronic device is not particularly limited in this application, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, or the like.

A third aspect of this application provides a method for manufacturing the electrochemical device disclosed in the first aspect of this application. The method includes the following steps:
disposing the first negative active material layer 121 on the surface of the negative current collector 122, where the negative electrode plate 12 includes the first groove 13 that runs through the first negative active material layer 121; and disposing a prelithiation region 123 and a non-prelithiation region 124 on the first negative active material layer 121;
disposing the first positive active material layer 112 on the surface of the positive current collector 111, and affixing the first insulation layer 14 onto the first positive active material layer 112; and
stacking the negative electrode plate 12 and the positive electrode plate 11, and winding the stacked plates to form the electrode assembly 10, where the first negative active material layer 121 faces the first positive active material layer 112, and the orthographic projection of the first insulation layer 14 on the negative electrode plate 12 covers the non-prelithiation region 124.

The electrochemical device prepared by the method according to the third aspect of this application can reduce the risk of lithium plating on the negative electrode plate 12 and improve the safety of the electrochemical device.

In this application, the first insulation layer 14 includes at least one of a single-sided tape, a double-sided tape, or a hot-melt adhesive. The material of the first insulation layer 14 is not particularly limited in this application, and may be polyethylene, polypropylene, or polyvinylidene difluoride, for example, as long as the objectives of this application can be achieved.

The lithium supplementation method is not particularly limited in this application, and may be selected by a person skilled in the art depending on the actual situation, as long as the objectives of this application can be achieved. For example, a lithium supplementation method includes: rolling a lithium foil in a drying room (with an ambient humidity less than 1.7%) until a micron-scale thickness, and then laminating and rolling the lithium foil with the surface of the negative electrode plate 12.

In this application, the electrode assembly 10 is packaged to obtain an electrochemical device. The packaging process is not particularly limited in this application, as long as the objectives of this application can be achieved.

In an embodiment of this application, at least one of lithium foil or lithium powder is applied onto a surface of the first negative active material layer 121 to create the prelithiation region 123 on the first negative active material layer 121. The prelithiation region 123 created in the above manner can improve the first-cycle Coulombic efficiency of the negative electrode plate 12, and increase the energy density of the electrochemical device.

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Test methods and test devices:

### Testing the morphology of the negative electrode plate:

Disassembling a cycled negative electrode plate in a drying room (with humidity less than 1.7%), cleaning the electrode plate with dimethyl carbonate (DMC) for 3 times, and then air-drying the negative electrode plate. Observing the morphology of the negative electrode plate with a scanning electron microscope (SEM). Capturing an SEM image and measuring the width of a stripe portion in the image.

### Testing the cross-sectional morphology of the negative electrode plate:

Polishing a disassembled negative electrode plate under the action of argon ions to obtain samples. Capturing a SEM image of the cross-sectional morphology of the negative electrode plate, and measuring the thickness of the stripe portion and the thickness of a lithium-containing compound layer on the surface of the negative electrode plate.

### High-temperature cycling acceleration test:

### Temperature of the test environment: 45±5 °C

Cycle test process: Charging a lithium-ion battery at the maximum rated current until a fully charged state, leaving the battery to stand for 5 minutes, and then discharging the battery at a constant current (rate) of 0.5 C until the voltage reaches 3.0 V, thereby completing one cycle. Repeating the above charging and discharging process for 500 cycles, and then charging the battery at the maximum rated current until a fully charged state, and making the battery undergo 500 cycles. Disassembling the lithium-ion battery, and observe the lithium plating status around the first groove.

### Determining severity of lithium plating:

Disassembling the cycled lithium-ion battery in a drying room (with humidity less than 1.7%), and taking pictures to record the lithium plating status around the first groove. If the lithium plating is not detected or the area of lithium plating is less than 2%, the status is referred to as lithium-plating-free. If the area of lithium plating is 2% to 20%, the status is referred to as slight lithium plating. If the area of lithium plating is greater than 20%, the status is referred to as severe lithium plating. The percentage of the lithium plating area is calculated based on the area of the first insulation layer on the first positive active material layer.

### Capacity test:

Charging a lithium-ion battery at a current (rate) of 0.5 C in a 25 °C environment until the voltage reaches an upper limit of 4.2 V. Subsequently, discharging the battery at a constant current of 0.2 C until a final voltage of 2.8 V. Calculating the 0.2 C first-cycle discharge capacity as the capacity of the lithium-ion battery.

### Embodiment 1-1

### <Preparing a negative electrode plate>

Mixing graphite as a negative active material, a silicon-oxygen compound (SiOₓ, x = 1), carboxymethyl cellulose, and styrene-butadiene rubber at a mass ratio of 96.7: 10: 1.3: 1.0, and then adding deionized water as a solvent. Blending the mixture to form a negative electrode slurry with a solid content of 60%, and stirring well. Coating one surface of a 10-µm thick negative current collector copper foil with the negative electrode slurry evenly, and drying the slurry at a temperature of 110 °C to obtain a negative electrode plate coated with a 150 µm-thick first negative active material layer on a single side. Subsequently, repeating the foregoing coating step on the other surface of the negative electrode plate to obtain a negative electrode plate coated with the first negative active material layer on both sides. Performing cold-pressing on the negative electrode plate after completion of coating, and then performing tab forming, slitting, laser cleaning, and the like to obtain a negative electrode plate with a first groove created in the middle of the tab. The first groove is used for welding the negative tab. The dimensions of the negative electrode plate are 83.3 mm × 1494 mm. The dimension of the first groove B₁ in the middle of the tab is 20 mm, and B₂ is 9 mm.

Affixing adhesive tape to a region that requires no lithium supplementation on the surface of the negative electrode plate, where the dimensions of the adhesive tape may be adjusted based on the designed dimensions of the non-prelithiation region. In other words, A₁ and A₂ are adjusted by adjusting the dimensions of the adhesive tape. Subsequently, rolling a lithium foil in a drying room (with an ambient humidity less than 1.7%) until a micron-scale thickness (2 µm), and then laminating and rolling the lithium foil with the surface of the prepared negative electrode plate. Subsequently, removing the adhesive tape from the surface of the negative electrode plate to obtain a negative electrode plate on which no lithium is supplemented around the first groove. The dimension A₁ of the non-prelithiation region around the first groove is 0.5 mm, and A₂ is 5 mm.

### <Preparing a positive electrode plate>

Mixing lithium cobalt oxide (LiCoO₂) as a positive active material, conductive carbon black as a conductive agent, and polyvinylidene difluoride (PVDF) at a mass ratio of 97: 1.4: 1.6, adding N-methylpyrrolidone NMP as a solvent, blending the mixture to form a positive electrode slurry with a solid content of 75 wt%, and stirring well. Coating one surface of a 10 µm-thick positive current collector aluminum foil with the positive electrode slurry evenly, and drying the slurry in a 110 °C environment to obtain a positive electrode plate coated with a 110 µm-thick positive active material layer on a single side. Subsequently, performing steps similar to those described above except that a blank foil region is reserved at one end of the positive current collector for welding a positive tab, so as to obtain a positive electrode plate coated with the positive active material on both sides. Performing cold-pressing on the positive electrode plate after completion of coating, and then performing slitting to obtain a positive electrode plate with dimensions of 81.9 mm × 1490 mm ready for future use.

### <Preparing an electrolyte solution>

Mixing ethylene carbonate (EC), propylene carbonate (PC), diethyl carbonate (DEC), and ethyl propionate (EP) at a mass ratio of EC: PC: DEC: EP = 3: 1: 3: 3 in an dry argon atmosphere glovebox to form an organic solvent, and then adding a lithium salt hexafluorophosphate (LiPF₆) into the organic solvent to dissolve, and mixing the mixture evenly to obtain an electrolyte solution in which a lithium salt concentration is 1 mol/L.

### <Preparing a separator>

Mixing PVDF and alumina ceramics at a mass ratio of 9: 1, adding deionized water as a solvent. Blending the mixture to form a slurry with a solid content of 12 wt%, and stirring well. Applying the slurry evenly onto one surface of a 15 µm-thick polyethylene film substrate, and performing drying to obtain a separator.

### <Preparing a lithium-ion battery>

Welding a tab into the first groove of the negative electrode plate prepared above, and welding a positive tab onto the blank foil region reserved at one end of the positive electrode plate. Stacking the positive electrode plate, the separator, and the negative electrode plate in sequence, so that the separator is located between the positive electrode plate and the negative electrode plate to play the role of isolation. Subsequently, affixing a first insulation layer (the first insulation layer is single-sided tape, and the dimensions of the first insulation layer are C₁ = 29 mm and C₂ = 27 mm) onto the first positive active material layer facing the first groove in which the negative tab is welded, so that the non-prelithiation region around the first groove falls inside the orthographic projection of the insulation layer on the negative electrode plate. Subsequently, winding the stacked structure by starting from an end away from the positive tab, so as to obtain an electrode assembly. Putting the electrode assembly into an aluminum laminated film package, leaving the electrode assembly in an 85 °C vacuum oven for 12 hours to remove moisture, and then injecting the prepared electrolyte solution. Performing vacuum sealing, standing, chemical formation (charging the battery at a constant current of 0.02 C until the voltage reaches 3.5 V, and then charging the battery at a constant current of 0.1 C until the voltage reaches 3.9 V), shaping, and capacity grading to obtain a lithium-ion battery. The rated capacity of the lithium-ion battery is 5000 mAh.

### Embodiment 1-2 to Embodiment 1-6

Identical to Embodiment 1-1 except that the dimensions A₁ and A₂ of the non-prelithiation region around the first groove are adjusted with reference to Table 1.

### Embodiment 2-1 to Embodiment 2-24

Identical to Embodiment 1-1 except that the dimensions A₁ and A₂ of the non-prelithiation region around the first groove are adjusted with reference to Table 2.

### Comparative Embodiment 1 to Comparative Embodiment 4

Identical to Embodiment 1-1 except that the dimensions A₁ and A₂ of the non-prelithiation region around the first groove are adjusted with reference to Table 2.

Table 1 and Table 2 show the relevant parameters and test results of the embodiments and comparative embodiments.

**Table 1**

| | C₁ (mm) | C₂ (mm) | B₁ (mm) | B₂ (mm) | A₁ (mm) | A₂ (mm) | Lithium plating status around first groove after cycling at 45 °C for 500 cycles | Capacity (mAh) |
|---|---|---|---|---|---|---|---|---|
| Embodiment 1-1 | 29 | 27 | 20 | 9 | 0.5 | 5 | Slight lithium plating | 5000 |
| Embodiment 1-2 | 29 | 27 | 20 | 9 | 1 | 5 | Slight lithium plating | 5000 |
| Embodiment 1-3 | 29 | 27 | 20 | 9 | 1.25 | 5 | No lithium plating | 5000 |
| Embodiment 1-4 | 29 | 27 | 20 | 9 | 5 | 5 | No lithium plating | 5000 |
| Embodiment 1-5 | 29 | 27 | 20 | 9 | 8 | 5 | No lithium plating | 5000 |
| Embodiment 1-6 | 29 | 27 | 20 | 9 | 10 | 5 | No lithium plating | 4997 |

**Table 2**

| | C₁ (mm) | C₂ (mm) | B₁ (mm) | B₂ (mm) | A₁ (mm) | A₂ (mm) | Lithium plating status around first groove after cycling at 45 °C for 500 cycles | Capacity (mAh) |
|---|---|---|---|---|---|---|---|---|
| Embodiment 2-1 | 29 | 27 | 20 | 9 | 0.5 | 0.5 | Slight lithium plating | 5000 |
| Embodiment 2-2 | 29 | 27 | 20 | 9 | 0.75 | 0.75 | Slight lithium plating | 5000 |
| Embodiment 2-3 | 29 | 27 | 20 | 9 | 1 | 1 | Slight lithium plating | 5000 |
| Embodiment 2-4 | 29 | 27 | 20 | 9 | 1.25 | 1.25 | No lithium plating | 5000 |
| Embodiment 2-5 | 29 | 27 | 20 | 9 | 1.75 | 1.75 | No lithium plating | 5000 |
| Embodiment 2-6 | 29 | 27 | 20 | 9 | 2 | 2 | No lithium plating | 5000 |
| Embodiment 2-7 | 29 | 27 | 20 | 9 | 2.25 | 2.25 | No lithium plating | 5000 |
| Embodiment 2-8 | 29 | 27 | 20 | 9 | 2.5 | 2.5 | No lithium plating | 5000 |
| Embodiment 2-9 | 29 | 27 | 20 | 9 | 2.75 | 2.75 | No lithium plating | 5000 |
| Embodiment 2-10 | 29 | 27 | 20 | 9 | 3 | 3 | No lithium plating | 5000 |
| Embodiment 2-11 | 29 | 27 | 20 | 9 | 3.5 | 3.5 | No lithium plating | 5000 |
| Embodiment 2-12 | 29 | 27 | 20 | 9 | 4 | 4 | No lithium plating | 5000 |
| Embodiment 2-13 | 29 | 27 | 20 | 9 | 4.5 | 4.5 | No lithium plating | 5000 |
| Embodiment 2-14 | 29 | 27 | 20 | 9 | 5 | 5 | No lithium plating | 5000 |
| Embodiment 2-15 | 29 | 27 | 20 | 9 | 5.5 | 5.5 | No lithium plating | 5000 |
| Embodiment 2-16 | 29 | 27 | 20 | 9 | 6 | 6 | No lithium plating | 5000 |
| Embodiment 2-17 | 29 | 27 | 20 | 9 | 6.5 | 6.5 | No lithium plating | 5000 |
| Embodiment 2-18 | 29 | 27 | 20 | 9 | 7 | 7 | No lithium plating | 5000 |
| Embodiment 2-19 | 29 | 27 | 20 | 9 | 7.5 | 7.5 | No lithium plating | 5000 |
| Embodiment 2-20 | 29 | 27 | 20 | 9 | 8 | 8 | No lithium plating | 5000 |
| Embodiment 2-21 | 29 | 27 | 20 | 9 | 8.5 | 8.5 | No lithium plating | 5000 |
| Embodiment 2-22 | 29 | 27 | 20 | 9 | 9 | 9 | No lithium plating | 5000 |
| Embodiment 2-23 | 29 | 27 | 20 | 9 | 9.5 | 9.5 | No lithium plating | 4995 |
| Embodiment 2-24 | 29 | 27 | 20 | 9 | 10 | 10 | No lithium plating | 4992. 5 |
| Comparative Embodiment 1 | 29 | 27 | 20 | 9 | 0 | 0 | Severe lithium plating | 5000 |
| Comparative Embodiment 2 | 29 | 27 | 20 | 9 | 0.25 | 0.25 | Severe lithium plating | 5000 |
| Comparative Embodiment 3 | 29 | 27 | 20 | 9 | 12.5 | 12.5 | No lithium plating | 4980 |
| Comparative Embodiment 4 | 29 | 27 | 20 | 9 | 15 | 15 | No lithium plating | 4970 |

As can be seen from Embodiments 1-1 to 1-6, the dimensions of the non-prelithiation region around the first groove are controlled to fall within the range specified in this application. Therefore, the local negative-to-positive electrode capacity ratio is relatively high. The negative electrode plate can effectively accommodate the lithium ions escaping from the positive electrode plate covered by the insulation layer and located on the opposite side, thereby alleviating the problem of lithium plating around the first groove on the negative electrode plate, reducing the risk of lithium plating on the negative electrode plate, and in turn, improving the safety of the lithium-ion battery.

As can be seen from Embodiments 2-1 to 2-24 versus Comparative Embodiment 2, when the dimensions fall within the range specified in this application, with the increase of the dimensions of the non-prelithiation region, the local negative-to-positive electrode capacity ratio increases. The negative electrode plate can effectively accommodate the lithium ions escaping from the positive electrode plate covered by the insulation layer and located on the opposite side, thereby alleviating the problem of lithium plating around the first groove on the negative electrode plate, reducing the risk of lithium plating on the negative electrode plate, and in turn, improving the safety of the lithium-ion battery.

As can be seen from Comparative Embodiment 1, when lithium is supplemented fully around the first groove, severe lithium plating occurs around the first groove on the negative electrode plate. That is because the first insulation layer on the positive electrode plate, which corresponds to the groove on the negative electrode plate, incurs a reduced bonding force due to the expansion and contraction of the positive active layer and the immersion in the electrolyte solution. The superficial lithium ions at the position covered by the first insulation layer are migrated and precipitated, and are over-intercalated and deposited on the opposite-side negative electrode plate, thereby resulting in severe lithium plating and being adverse to the safety of the lithium-ion battery.

As can be seen from Embodiments 2-1 to 2-24 versus Comparative Embodiments 3 to 4, when the dimensions of the non-prelithiation region around the first groove are excessive, a great impact is caused to the capacity of the battery.

The technical solutions provided in this application can effectively reduce the risk of lithium plating on the negative electrode plate, improve the safety of the lithium-ion battery, and maintain good cycle performance while increasing the energy density of the lithium-ion battery.

What is described above is merely exemplary embodiments of this application, but is not intended to limit this application. Any modifications, equivalent replacements, improvements, and the like made without departing from the spirit and principles of this application still fall within the protection scope of this application.

## Claims

1. An electrochemical device, comprising an electrode assembly; wherein
the electrode assembly comprises a positive electrode plate and a negative electrode plate, the positive electrode plate comprises a positive current collector and a first positive active material layer disposed on a surface of the positive current collector, the negative electrode plate comprises a negative current collector and a first negative active material layer disposed on a surface of the negative current collector, the first negative active material layer comprises a prelithiation region and a non-prelithiation region, and the negative electrode plate comprises a first groove, the first groove runs through the first negative active material layer and exposes the surface of the negative current collector;
the non-prelithiation region comprises a first edge and a second edge, the first edge is disposed along a first direction, the second edge is disposed along a second direction and connected to the first edge, the first direction is a length direction of the negative electrode plate, and the second direction is a width direction of the negative electrode plate;
a distance between the first edge and an adjacent edge of the first groove is A₁ mm, and a dimension of the first groove in the second direction is B₁ mm; and
the positive electrode plate further comprises a first insulation layer affixed onto the first positive active material layer facing the first groove, and the non-prelithiation region is located inside an orthographic projection of the first insulation layer on the negative electrode plate, a dimension of the first insulation layer in the second direction is C₁ mm, and 0.5 ≤ A₁ ≤ C₁ - B₁ + 1.

2. The electrochemical device according to claim 1, wherein, a distance between the second edge and an adjacent edge of the first groove is A₂ mm, a dimension of the first groove in the first direction is B₂ mm, a dimension of the first insulation layer in the first direction is C₂ mm, and 0.5 ≤ A₂ ≤ 0.5 × (C₂ - B₂) + 1.

3. The electrochemical device according to claim 2, wherein 0.5 ≤ A₁ ≤ 9, and 0.5 ≤ A₂ ≤ 9.

4. The electrochemical device according to claim 2, wherein 18 ≤ B₁ ≤ 22, and 9 ≤ B₂ ≤ 13.

5. The electrochemical device according to claim 2, wherein 25 ≤ C₁ ≤ 29, and 23 ≤ C₂ ≤ 27.

6. The electrochemical device according to claim 2, wherein 1.25 ≤ A₁ ≤ 9, and 1.25 ≤ A₂ ≤ 9.

7. The electrochemical device according to claim 1, wherein, viewed from a thickness direction of the negative electrode plate, the prelithiation region comprises a stripe portion;
in the first direction, a width of the stripe portion is 0.1 mm to 2 mm; and/or
in the thickness direction, a thickness of the stripe portion is 0.04 µm to 0.5 µm.

8. The electrochemical device according to claim 1, wherein a material of the prelithiation region comprises at least one of lithium carbonate, lithium oxide, lithium nitride, or lithium fluoride.

9. The electrochemical device according to claim 1, wherein the first insulation layer comprises at least one of a single-sided tape, a double-sided tape, or a hot-melt adhesive.

10. The electrochemical device according to claim 1, wherein the negative electrode plate further comprises a negative tab, and the negative tab is disposed in the first groove and electrically connected to the negative current collector.

11. The electrochemical device according to claim 10, wherein the negative electrode plate further comprises a second insulation layer disposed on the negative tab, and an orthographic projection of the second insulation layer on the negative electrode plate is located inside the non-prelithiation region.

12. The electrochemical device according to claim 1, wherein the first negative active material layer comprises a negative active material, and the negative active material comprises a silicon-based material.

13. The electrochemical device according to claim 1, wherein, in the second direction, the first groove does not run through the first negative active material layer.

14. An electronic device, comprising the electrochemical device according to any one of claims 1 to 13.

15. A method for preparing the electrochemical device according to any one of claims 1 to 13, comprising the following steps:
disposing the first negative active material layer on the surface of the negative current collector, wherein the negative electrode plate comprises the first groove that runs through the first negative active material layer; and disposing a prelithiation region and a non-prelithiation region on the first negative active material layer;
disposing the first positive active material layer on the surface of the positive current collector, and affixing the first insulation layer onto the first positive active material layer; and
stacking the negative electrode plate and the positive electrode plate, and winding the stacked plates to form the electrode assembly, wherein the first negative active material layer faces the first positive active material layer, and the orthographic projection of the first insulation layer on the negative electrode plate covers the non-prelithiation region.

16. The preparation method according to claim 15, wherein at least one of lithium foil or lithium powder is applied onto a surface of the first negative active material layer to create the prelithiation region on the first negative active material layer.
